# EUROPÄISCHE PATENTSCHRIFT

(11) **EP 1 635 074 B1**
(45) Veröffentlichungstag und Bekanntmachung des Hinweises auf die Patenterteilung: **13.04.2016**
(21) Anmeldenummer: 05017085.1
(22) Anmeldetag: 05.08.2005
(51) Int. Cl.: F15D 1/02

(54) **Vorrichtung zur gezielten Aufteilung einer einen Kanal durchströmenden nicht-newtonschen Flüssigkeit, wie zum Beispiel einer Kunststoffschmelze**
Device for dividing a flow of non-Newtonian fluid, e.g. of molten plastic
Dispositif pour diviser un fluide non-newtonien, par exemple du plastique fondu

(30) Priorität: 11.09.2004 DE 102004043949
(43) Veröffentlichungstag der Anmeldung: 15.03.2006
(73) Patentinhaber: INCOE INTERNATIONAL, INC., 63322 Rödermark (DE)
(72) Erfinder: Goinski, Michael, 63110 Rodgau (DE)
(74) Vertreter: Boecker, Joachim

(56) Entgegenhaltungen:
- EP-A2- 0 523 549
- DE-A1- 3 335 277
- GB-A- 662 734
- GB-A- 933 223
- JP-A- 60 099 948
- US-A- 2 488 185
- US-A- 4 080 990

## Beschreibung

Die vorliegende Erfindung bezieht sich auf eine Vorrichtung zur gezielten Aufteilung einer einen Kanal durchströmenden nicht-newtonschen Flüssigkeit.

Eine solche Flüssigkeit ist beispielsweise eine Kunststoffschmelze. Kunststoffschmelzen werden beim Spritzgießen beispielsweise durch ein Heizkanalverteilersystem geleitet, in welchem an bestimmten Stellen Kanalverzweigungen vorhanden sind, in denen die in einem Kanal zufließende Schmelze auf zwei abgehende Schmelzekanäle aufgeteilt wird. Diese Kanalverzweigungen sind überwiegend T-förmig ausgebildet.

Bei einer newtonschen Flüssigkeit, die durch einen kreisförmigen Kanal strömt, stellt sich eine parabelförmige Strömungsgeschwindigkeitsverteilung der in gedachte konzentrische Hohlzylinderschichten aufgeteilten Flüssigkeit ein, wobei im Zentrum des Kanals die Strömungsgeschwindigkeit am größten ist. Bei einer solchen Flüssigkeit ist die Scherung zwischen den einzelnen gedachten Hohlzylinderschichten der Flüssigkeit annähernd gleich groß.

Anders verhält sich dagegen eine nicht-newtonschen Flüssigkeit, wie beispielsweise (heißer) flüssiger Kunststoff. Bei dieser ist die Viskosität sehr stark von der Scherung abhängig, die nahe der Wandung des kreisförmigen Kanals am größten ist. Die Viskosität ist um so kleiner, je größer die Scherung ist. Dies hat zur Folge, daß die Viskosität nahe der Wandung des kreisförmigen Kanals am geringsten ist. Die Geschwindigkeitsverteilung der Schmelze über den Querschnitt ähnelt dabei einer stark abgeflachten Parabel. Bei vereinfachter näherungsweiser Betrachtung bedeutet dies, daß im zentralen Bereich des Kanals die relativ zähe strömende Schmelze sich wie ein Pfropfen mit einer von der radialen Lage annähernd unabhängigen Strömungsgeschwindigkeit verhält, während im peripheren Bereich die Schmelze infolge der stärkeren Scherung dünnflüssiger ist und langsamer fließt.

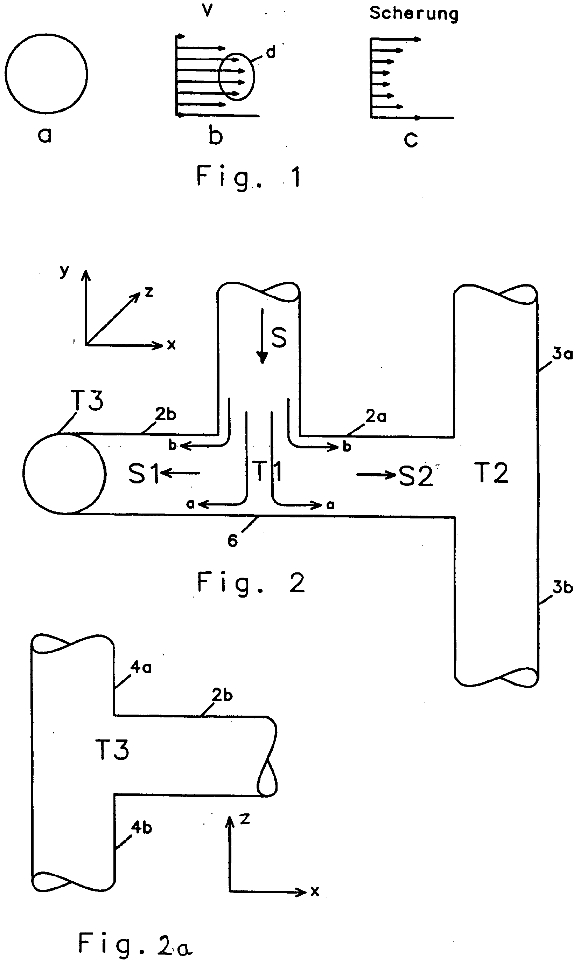

Diese Verhältnisse veranschaulicht die Figur 1. Figur 1a zeigt einen kreisförmigen Kanal, durch den eine nichtnewtonsche Flüssigkeit, zum Beispiel eine Kunststoffschmelze, fließt. Figur 1b zeigt die Verteilung der Strömungsgeschwindigkeit V über den Querschnitt, und Figur 1c zeigt die der Scherung. Der Bereich d entspricht in etwa dem vorgenannten Pfropfen.

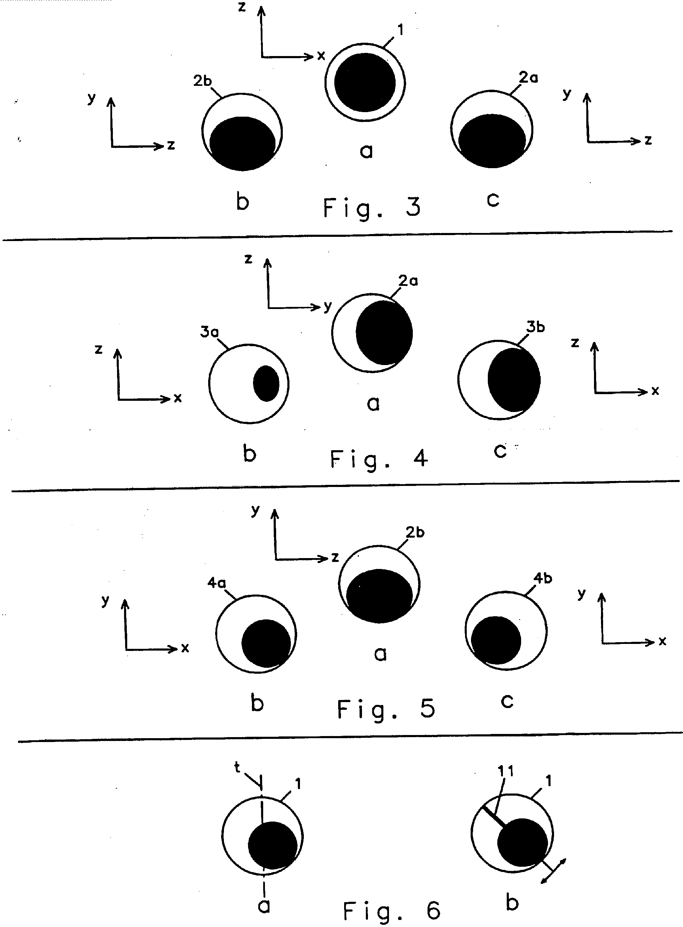

Wird ein in Figur 1 gezeigter nicht-newtonscher Flüssigkeitstrom gemäß Figur 2 in einer rechtwinkligen (T-förmigen) Kanalverzweigung T1 umgelenkt und in zwei Teilströme S1 und S2 aufgeteilt, dann verteilen sich der dickflüssige Flüssigkeitanteil und der dünnflüssige Flüssigkeitanteil über den Kanalquerschnitt so, wie dies Figur 3 zeigt. Dabei stellt die voll eingefärbte Fläche die Flüssigkeit hoher Viskosität und die helle Fläche die Flüssigkeit niedriger Viskosität dar. Von dem in den Figuren 2 bis 5 eingezeichneten Koordinatensystemen liegen die Koordinaten x und y in der Zeichenebene, und die Koordinate z verläuft senkrecht zur Zeichenebene. Der dickflüssige Anteil der nicht-newtonschen Flüssigkeit sammelt sich also im wesentlichen (im Sinne der Zeichnung) im unteren Teil der in Figur 2 gezeigten Kanalabschnitte 2a und 2b. Dies ist leicht einsehbar, da die aus dem zentralen Bereich des Kanalabschnitts 1 zufließende dickflüssige Flüssigkeit (Schmelze) bis zum Boden 6 des T-Stücks vorstößt und erst dort im Sinne der Figur 2 nach links und rechts umgelenkt wird, wie dies die Pfeile a in Figur 2 andeuten, während die im Kanal 1 im peripheren Bereich strömende dünnflüssige Flüssigkeit bereits am Anfang der Kanalverzweigung umgelenkt wird, wie dies die Pfeile b andeuten.

Wären die in Figur 2 gezeigten abgehenden Kanalabschnitte 2a und 2b sehr lang, so würde sich allmählich wieder die in Figur 3a gezeigte natürliche Verteilung einstellen. In der Praxis sind die Kanalabschnitte jedoch kurz, so daß näherungsweise die in Figur 3b und 3c gezeigte Verteilung bis zur nächsten Umlenkung in einem T-Stück erhalten bleibt.

Trifft die im Kanalabschnitt 2a fließende Flüssigkeit auf das T-Stück T2, dessen Längsachse in y-Richtung verläuft, so stellt sich in den abgehenden Kanälen 3a und 3b die in Figur 4 gezeigte Verteilung ein. Der Blick ist dabei in Strömungsrichtung des jeweiligen abgehenden Kanals gerichtet. Man erkennt in den abgehenden Kanälen eine starke Ungleichheit von dickflüssigem und dünnflüssigem Anteil sowie auch eine starke Unsymetrie dieser Anteile bezogen auf den Mittelpunkt der Kanäle.

Das T-Stück T3 in Figur 2 hat zwei senkrecht zur zeichenebene (in z-Richtung) verlaufende abgehende Kanäle 4a und 4b. Siehe Figur 2a, welche eine Draufsicht auf diesen Teil der Figur 2 zeigt. Nach Umlenkung in diesem T-STück T3 ergeben sich die in den Figuren 5c und 5b gezeigten Aufteilungen der dickflüssigen und dünnflüssigen Anteile der Flüssigkeit. In dem in Figur 2 aus der zeichenebene nach oben heraustretenden abgehenden Kanal 4b stellt sich die Verteilung gemäß Figur 5c ein, und in dem in Figur 2 in die Zeichenebene hineintretenden Kanal 4b stellt sich die Verteilung gemäß Figur 5b ein, wobei die Blickrichtung wieder vom T-Stück in Strömungsrichtung der abgehenden Kanäle definiert ist.

Wenn beim Spritzgießen die an ein Spritzgießwerkzeug (Form) angeschlossenen Spritzdüsen aus Kanälen gespeist werden, in denen die Mengenverteilung der Schmelzeanteile unterschiedlicher Viskosität ungleich ist (zum Beispiel Figur 4b und 4c) und/oder bei denen die Verteilung der Schmelze nicht mehr rotationssymmetrisch in Bezug auf die Kanallängsachse ist (zum Beispiel Figuren 3b und 5b), dann kann dies zu Defekten an den gegossenen Spritzgußprodukten führen.

Nimmt man an, daß ein Platte über mehrere über die Fläche der Platte verteilte Düsen gespritzt wird, so können folgende Defekte auftreten:
Ist der Anteil der dünnflüssigen Schmelze aus den Düsen im Außenbereich der Platte größer als aus den Düsen im Innenbereich der Platte, so hat dies zur Folge, daß unter dem anstehenden Druck der einströmenden Schmelze in den Außenbereich der Platte mehr Schmelze in das Spritzwerkzeug (Spritzform) hineingedrückt wird als in den Mittenbereich. Das bedeutet, daß der Platte pro Flächeneinheit im Außenbereich mehr Material zugeführt wird als im Innenbereich mit der Folge, daß die gegossene Platte wellenförmige Ränder aufweist. Wird umgekehrt im Innenbereich mehr dünnflüssige Schmelze in die Spritzform hineingedrück, so führt nach dem Erkalten der Schmelze die größere Schmelzenmenge pro Flächeneinheit im Innenbereich zu einer Ausbeulung der Platte im Innenbereiches.

Ähnliche Verhältnisse, jedoch weniger gravierend, entstehen, wenn die Schmelzeanteile in den die Düsen speisenden Kanalabschnitten lediglich unsymmetrisch verteilt sind.

Wird beispielsweise von jeder der mehreren Spritzdüsen eines Heißkanalverteilersystems je ein Becher gespritzt, so hat die ungleiche Mengenverteilung von dickflüssiger und dünnflüssiger Schmelze auf verschiedene Düsen zur Folge, daß die Becher unterschiedliche Wandstärken aufweisen. Eine unsymmetrische Verteilung der Schmelzeanteile kann dazu führen, daß diejenige Seite des Bechers, welche vorzugsweise dünnflüssige Schmelze enthält, dicker als die gegenüberliegende Seite des Bechers wird, was zu einem verbeulten Becher führt, und/oder daß dort, wo dickflüssige Schmelze in die Form eindringt, diese nicht bis zum Boden der Form gelangt.

Aus der US-A-4 080 990 ist ein kompliziert aufgebautes Sechswege-Umlenkventil für Flüssigkeiten bekannt. In diesem sind zwei Dreiwegeventile integriert, welche die Umlenkung der aus einem Kanalabschnitt zuströmenden Flüssigkeit in jeweils einen von zwei oder in beide abgehenden Kanalabschnitten einer T-förmigen Kanalfiguration gestattet. Zu diesem Zweck ist in einer Kammer, an die alle drei Kanalabschnitte angeschlossen sind, ein Absperrorgan angeordnet, zu dem zwei spitzwinklich miteinander verbundene Klappen gehören, die mit der von beiden Klappen gebildeten Spitze zum zuströmenden Kanalabschnitt weisen. Die Klappenkonstruktion kann durch einen komplizierten handbetriebene Verstellmechanismus so geschwenkt werden, dass wahlweise die eine oder andere Klappe den ihr zugeordneten der beiden abgehenden Kanalabschnitte verschließt. Die von der Erfindung behandelte Problematik wird in der Druckschrift weder behandelt noch erwähnt.

Der vorliegenden Erfindung liegt die Aufgabe zugrunde, Vorrichtungen zu entwickeln, durch die die durch die beschriebenen Umlenkungen verursachte unsymetrische und/oder ungleiche Mengenverteilung der Flüssigkeitsanteile unterschiedlicher Viskosität möglichst beseitigt und/oder ihre Entstehung verhindert wird.

Zur Lösung dieser Aufgabe wird eine erste Ausführungsart einer Vorrichtung gemäß der Erfindung vorgeschlagen, welche die im kennzeichnenden Teil des Anspruchs 1 genannten Merkmale hat.

Vorteilhafte weiterbildungen dieser Ausführungsart sind in den Unteransprüchen 2 bis 6 genannt.

Zur Lösung der gestellten Aufgabe wird ferner eine zweite Ausführungsart einer Vorrichtung gemäß der Erfindung vorgeschlagen, welche die im kennzeichnenden Teil des Anspruches 7 genannten Merkmale hat.

Vorteilhafte Ausgestaltungen dieser zweiten Ausführungsart sind in den Unteransprüchen 8 bis 12 genannt.

Durch die erste Art einer Vorrichtung gemäß der Erfindung wird erreicht, daß dann, wenn im zuströmenden Kanalabschnitt einer vorzugsweise oder im wesentlichen T-förmigen Kanalverzweigung die Schmelzenanteile unterschiedlicher Viskosität nicht rotationssymetrisch verteilt sind, sichergestellt wird, daß in den beiden abgehenden Kanalabschnitten der Kanalverzweigung das Verhältnis der Schmelzenanteile unterschiedlicher Viskosität im wesentlichen gleich groß ist.

Durch die zweite Ausführungsart der Vorrichtung gemäß der Erfindung wird erreicht, daß dann, wenn im zuströmenden Kanalabschnitt einer vorzugsweise oder im wesentlichen T-förmigen Kanalverzweigung die Mengenverteilung der Schmelzenanteile unterschiedlicher Viskosität rotationssymetrisch ist, in den beiden abgehenden Kanalabschnitten der Kanalverzweigung im wesentlichen sowohl die rotationssymetrische Verteilung erhalten bleibt als auch das Verhältnis der Schmelzenanteile unterschiedlicher Viskosität in beiden abgehenden Kanälen im wesentlichen gleich groß ist. Das Verteilungsmuster in den abgehenden Kanalabschnitten ist also im wesentlichen identisch mit dem im zuströmenden Kanalabschnitt.

Die abgehenden Kanäle können gleiche Querschnitte wie der zugehende Kanal haben, so daß die Strömungsgeschwindigkeit in den abgehenden Kanälen auf die Hälfte herabgesetzt wird; sie können aber auch kleinere Querschnitte haben, so daß die Strömungsgeschwindigkeit weniger stark oder überhaupt nicht vermindert wird.

Im folgenden wird die Erfindung anhand von Ausführungsbeispielen und anhand weiterer Figuren näher erläutert. Es zeigen
- Figur 1: die Strömungsverhältnis einer nicht-newtonschen Flüssigkeit in einem zylindrischen Kanal,
- Figur 2: ein Kanalverteilersystem mit drei T-förmigen Kanalverzweigungen,
- Figur 2a: einen Teil der Figur 2, gesehen in Draufsicht von oben,
- Figur 3: die Verteilung der zunächst symetrischen Verteilung der dickflüssigen und dünnflüssigen Flüssigkeitsanteile hinter einer ersten Kanalverzweigung T1,
- Figur 4: die Verteilung, welche die von der ersten Kanalverzweigung T1 weiterfließende Schmelze durch eine Kanalverzweigung T2 erfährt, die in der gleicher Ebene, wie die zuvor passierte Kanalverzweigung T1 liegt,
- Figur 5: die entsprechende Verteilung wie in Figur 4 an einer nachfolgenden Kanalverzweigung T3, die in einer Ebene senkrecht zu der zuvor passierten Kanalverzweigung T1 liegt,
- Figuren 6a und 6b: ein Ausführungsbeispiel für den prinzipiellen Aufbau der ersten Art einer Vorrichtung gemäß der Erfindung,
- Figur 7: ein praktisches Ausführungsbeispiel der ersten Art einer Vorrichtung gemäß Figur 6, die in einer T-förmige Kanalverzweigung eingebaut ist,
- Figuren 8a und 8b: in perspektivischer Darstellung ein praktisches Ausführungsbeispiel des in Figur 7 verwendeten Trennwandstopfens,
- Figuren 9a und 9b: ein praktisches Ausführungsbeispiel der zweiten Art einer Vorrichtung gemäß der Erfindung, die in eine T-förmige Kanalverzweigung eingebaut ist, in zwei rechtwinklig zueinder stehenden Schnitten,
- Figuren 10a und 10b: ein praktisches Ausführungsbeispiel des Umlenkkörpers 83 in Figur 9a und 9b in zwei rechtwinklig zueinander stehenden Ansichten in vergrößertem Maßstab, ergänzt durch ein Befestigungsteil,
- Figur 11: einen Umlenkkörper gemäß Figur 10 im eingebauten Zustand in einem T-Stück.

Die Figuren 6a und 6b zeigen ein Ausführungsbeispiel für den prinzipiellen Aufbau der ersten Art einer Vorrichtung gemäß der Erfindung.

In die Kanalverzweigung wird eine auf die zuströmende Schmelze gerichtete Trennwand 11 derart eingebaut, daß diese den aus dem zuführenden Kanalabschnitt 1 entgegen kommenden Schmelzestrom aufteilt. Dabei wird die Trennwand 11 in einer solche Drehwinkellage eingesetzt, daß sie die zuströmende Schmelze, in welcher die Flüssigkeitsanteile unterschiedlicher Viskosität nicht rotationssymetrisch zur Längsachse des Kanals verteilt sind, derart aufteilt, daß beide Teilströme gleiche Mengen an Flüssigkeitsanteilen unterschiedlicher Viskosität enthalten. Nimmt man an, daß sich bei fehlender Trennwand 11 die Schmelze entsprechend der in Figur 6a gezeigten Linie t auf die abgehenden Kanäle verteilen würde, so kann eine Trennwand 11, die in der in Figur 6b gezeigten Winkellage eingesetzt wird, die zufließende Schmelze so aufteilen, daß in beide abgehenden Kanäle das gleiche Verhältnis von dickflüssiger und dünnflüssiger Flüssigkeit eingespeist wird. Die Trennwand 11 kann in geeigneter Weise mit fest eingestellter oder verstellbarer Drehwinkellage in der Kanalverzweigung angeordnet werden.

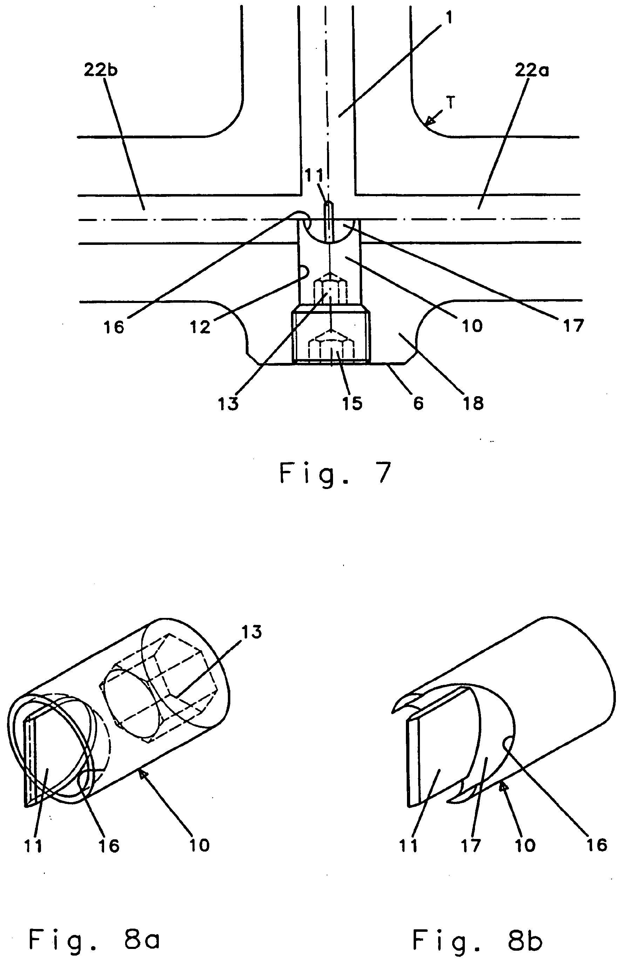

Eine praktisches Ausführungsbeispiel einer solchen Vorrichtung gemäß der Erfindung zeigen die Figuren 7 und 8.

In Figur 7 wird vom Boden 6 der T-förmigen Kanalverzweigung aus eine Bohrung 12 im T-Stück angebracht. In diese Bohrung 12 wird ein Trennwandstopfen 10, an dem eine Trennwand 11 starr befestigt ist, bis zur Mitte der abgehenden Kanalabschnitte 2a, 2b eingepreßt. Dabei wird der Trennwandstopfen, beispielsweise mittels eines Imbus-Sechskantloches 13 in die gewünschte Drewinkellage gedreht, wie dies anhand von Figur 6b erläutert wurde. Um ein Herausdrücken des im Betrieb unter Druck stehenden Stopfens 10 zu verhindern, wird dieser in seiner achsialen Lage durch einen Schraubstopfen 14 fixiert, der beispielsweise mittels eines Imbus-Sechskantloches 15 in die Bohrung 12 eingeschraubt werden kann. Der Stopfen 10 ist im übrigen ein massiver Körper, der an seinem trennwand-seitigen Ende eine kalottenförmige Ausnehmung 16 hat, in der die Trennwand 11 mit ihrer dem zuführenden Kanalabschnitt 1 abgewandten Seite in einer beliebigen Weise starr befestigt ist. Die erforderliche Drewinkellage der Trennwand 11 wird durch die Drewinkellage bestimmt, mit der der Trennwandstopfen 10 in die Bohrung 12 eingesetzt wird. Die Beibehaltung dieser Drewinkellage wird entweder durch den Preßsitz selbst oder durch eine zusätzliche geeignete Drehsicherung erreicht.

Zweckmäßigerweise nachdem der Stopfen, wie zuvor beschrieben, in die Kanalverzweigung eingebaut worden ist, wird von den abgehenden Kanälen 2a und 2b aus der Trennwandstopfen 10 im Bereich der kalottenförmigen Ausnehmung 16 auf den Durchmesser der abgehenden Kanäle aufgebohrt, wobei die (in der Projektion) halbkreisförmigen Strömungsöffnungen 17 entstehen. Natürlich können diese Strömungsöffnungen auch bereits vor dem Einbau an dem Trennwandstopfen vorgesehen werden.

In Figur 7 ist zur besseren Anschauung die Trennwand 11 in einer Winkellage senkrecht zur Zeichenebene dargestellt, und die durch die Aufbohrung entstandenen Öffnungen 17 sind in der Zeichenebene liegend dargestellt. Es versteht sich, daß in Wirklichkeit diese Durchströmöffnungen 17 um 90° gedreht liegen, während die Winkellage der Trennwand 11 eine der Verteilung der Flüssigkeitsanteile unterschiedlicher Viskosität im zuströmenden Kanal 1 angepaßte Winkellage im Verhältnis zur Zeichenebene einnehmen, wie die Figur 6b zeigt.

In Figur 7 ist der Boden 6 der Kanalverzweigung mit einer Verstärkung 18 dargestellt. Diese ist nur dann erforderlich, wenn ein handelsübliches T-Stück beziehungsweise die Wand eines Heißkanalverteilerblocks, in dem die Strömungskanäle eingearbeitet sind, eine nicht ausreichend dicke Wand hat.

Die Figuren Figur 8a und Figur 8b zeigen zwei perspektivische Darstellungen des zuvor beschriebene Ausführungsbeispiels des massiven Trennwandstopfens 10 mit der Trennwand 11. Figur 8a zeigt den Stopfen 10 vor der Aufbohrung der kalotten-förmigen Ausnehmung 16 sowie unter Andeutung des rückseitigen Imbus-Sechskantloches 13. Figur 8b zeigt den Stopfen mit den zweckmäßigerweise nach erfolgtem Einbau anzubringenden Aufbohrungen und den dadurch entstehenden Strömungsöffnungen 17.

Bei der zweiten Ausführungsart einer Vorrichtung gemäß der Erfindung wird das Ziel verfolgt, einen Flüssigkeitsstrom mit symmetrischer Verteilung der Flüssigkeitsanteile unterschiedlicher Viskosität gemäß Figur 3a so in einer Kanalverzweigung aufzuteilen und umzulenken, daß diese Verteilung in den abgehenden Kanälen der Kanalverzweigung im wesentlichen erhalten bleibt.

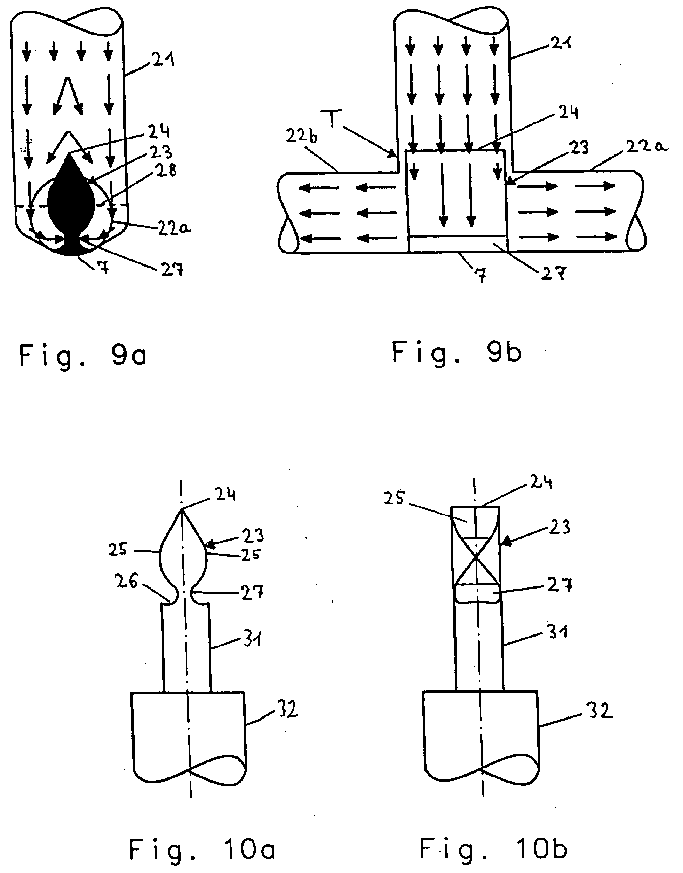

Nimmt man in Figur 9b an, daß die Flüssigkeit im zugehenden Kanalabschnitt 21 gemäß Figur 3a verteilt ist, so wird ohne zusätzliche Maßnahmen die Verteilung in den abgehenden Kanalabschnitten 22a und 22b den Figuren 3b und 3c entsprechen. Würde man jedoch einen gleich großer Flüssigkeitstrom, wie er durch das Rohr 21 im Sinne der Zeichnung von oben der Kanalverzweigung zugeführt wird, zusätzlich auch von unten zuführen, so ist leicht einzusehen, daß die in Figur 9b zur Seite hin in die Kanäle 22a und 22b abgedrängte dickflüssige Flüssigkeitskomponente durch den gedachten zusätzlichen Flüssigkeitsstrom zur Mitte der Kanäle 22a und 22b hin verschoben werden würde.

Dieser Effekt wird durch die zweite Ausführungsart der Vorrichtung gemäß der Erfindung bei einer normalen Kanalverzweigung verwirklicht.

Der Erfindungsgedanke bei der zweiten Ausführungsart einer Vorrichtung gemäß der Erfindung besteht darin, die im Zentrum des zuführenden Kanalabschnitts fließende dickflüssige Flüssigkeitskomponente aufzuteilen und die beiden Teilkomponenten so umzulenken, daß sie vor den Eingängen der abgehenden Kanalabschnitte möglichst senkrecht aufeinander stoßen, wobei ihre Strömungsrichtung bei diesem Zusammenstoß im wesentlichen senkrecht zur Längsrichtung der abgehenden Kanäle gerichtet ist.

Um dies zu erreichen, befindet sich in der Kanalverzweigung ein Umlenkkörper 23, der so beschaffen ist, daß er mit einer Schneide 24 in den zuführenden Kanalabschnitt 21 hineinragt und im wesentlichen die dickflüssige Flüssigkeitskomponente, die im Zentrum des Kanalabschnitts 21 fließt, in zwei Teilkomponenten aufspaltet, von denen die eine auf der linken und die andere auf der rechten Seite des Umlenkkörpers 23 weiterfließt. Diese Teilkomponenten werden dabei so umgelenkt, daß sie an den im Sinne der Zeichnung unteren Ende 7 der Kanalverzweigung möglichst senkrecht aufeinander stoßen.

Der Steg 27, auf dessen Seiten die beiden Teilkompenenten des dickflüssigen Anteils auftreffen, dient lediglich der mechanischen Befestigung des Umlenkkörpers 23 im Kanalverzweigungsstück. Für die erfindungsgemäße Wirkung ist er nicht erforderlich. Der eigentliche Umlenkkörper 23 berührt vorzugsweise über seinen gesamten Umfang nirgends den Kanalabschnitt 21.

Die Figuren 10a und 10b zeigen eine praktische Ausführungsform des Umlenkkörpers 23. An den genannten Steg 27 schließt sich ein zylindrischer Abschnitt 31 an, der sich in einem im Durchmesser vergrößerten zylindrischen Abschnitt 32 fortsetzen kann. Mit diesem Abschnitt 31 wird der Umlenkkörper durch eine Bohrung im Boden der Kanalverzweigung in diese bis in die in den Figuren 9a und 9b gezeigte Lage hineingeschoben und dichtend befestigt.

Im Prinzip genügt eine irgendwie beschaffene Befestigung des Umlenkkörpers 23 in der Kanalverzweigung, die beispielsweise auch durch die in Figur 9a gestrichelt angedeutete Streben 28 erfolgen kann, was jedoch bei kleinen Kanaldurchmessern schwierig herzustellen ist.

Den Umlenkkörper 23 mit dem Steg 27 und dem zylindrischen Abschnitt 31 kann man sich aus einem durchgehenden kreiszylindrischen Körper hergestellt denken, der an seinem vorderen Ende mit der Schneide 24 versehen ist und an seinem hinteren Ende mit einer den Steg 27 bildenden Einschnürung durch Auskerbung von zwei Seiten, die einander gegenüber und parallel zur Schneide 24 liegen. Die einander gegenüberliegenden Seiten 25 des Umlenkkörpers liegen dabei auf sich von der Schneide 24 zum Steg 27 erstreckende kreisförmig oder ähnliche gekrümmte Flächen, die in Flächen 26 des Ausgangszylinders 31 übergehen.

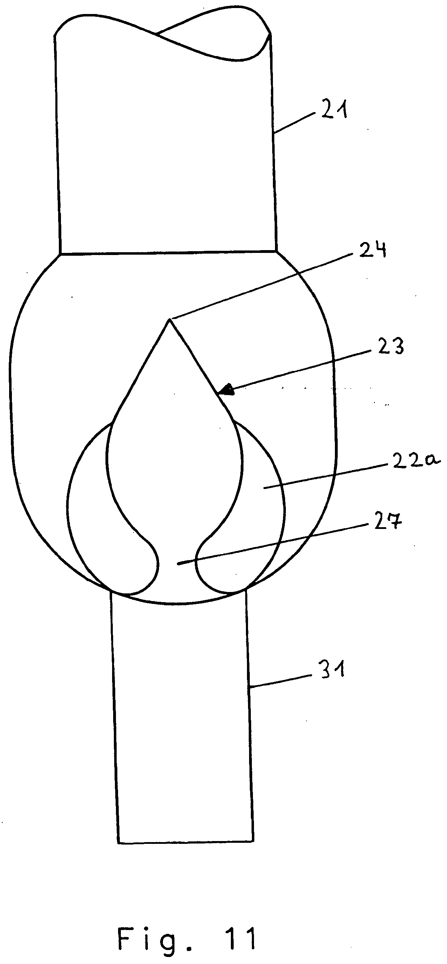

Figur 11 zeigt einen Umlenkkörper nach Art der Figuren 10a und 10b im eingebauten Zustand in einer T-förmigen Kanalverzweigung. Soweit die Bezugszeichen in Figur 11 mit denen in den Figuren 9 und 10 übereinstimmen, bezeichnen sie dieselben Gegenstände wie in jenen Figuren.

## Patentansprüche

1. Vorrichtung zur gezielten Aufteilung einer einen Kanal (1) durchströmenden nicht-newtonschen Flüssigkeit, zum Beispiel einer Kunststoffschmelze, die strömungsbedingt eine im Querschnitt nach außen abnehmende Viskosität aufweist, beim Durchfluß durch eine den Flüssigkeitsstrom umlenkende und aufteilende vorzugsweise oder im wesentlichen T-förmige Kanalverzweigung (T), **dadurch gekennzeich**n e t, daß zur Erzielung einer Aufteilung der Flüssigkeit auf die abgehenden Kanäle (2a,2b) der Kanalverzweigung (T) derart, daß die in die abgehenden Kanäle einströmende Flüssigkeit möglichst keine ungleich große Verteilung der unterschiedlich viskosen Anteile der Flüssigkeit erleidet, am Ende oder kurz vor oder kurz hinter dem Ende des zuführenden Kanals (1) eine nicht zum Verschließen eines der abgehenden Kanäle (2a,2b) geeignete Trennwand (11) in die Kanalverzweigung (T) eingebaut ist, die den aus dem zuführenden Kanalabschnitt (1) entgegen strömenden Flüssigkeitstrom in zwei Hälften aufteilt, wobei die Drehwinkellage der Trennwand (11) um die Längsachse des zuführenden Kanals eine Stellung einnimmt, die der Verteilung der unterschiedlich viskosen Anteile der Flüssigkeit in dem zuführenden Kanalabschnitt (1) angepaßt ist (Figur 7).

2. Vorrichtung nach Anspruch 1, **dadurch gekennzeichnet, daß** die Trennwand (11) in ihrer Winkellage verstellbar ist.

3. Vorrichtung nach Anspruch 1 oder 2, **dadurch gekennzeichnet, daß** die Trennwand (11) mittels eines Trennwandstopfens (10), an welchem die Trennwand (11) befestigt ist, über eine Bohrung (12) im Boden (6) der Kanalverzweigung (T) in diese einsetzbar beziehungsweise eingesetzt ist.

4. Vorrichtung nach Anspruch 3, **dadurch gekennzeichnet, daß** der Trennwandstopfen (10) an seinem zum zuführenden Kanalabschnitt (1) weisenden Ende mit einer kallotenförmigen Ausnehmung (16) versehen ist, in der die Trennwand (11) befestigt ist.

5. Vorrichtung nach Anspruch 4, **dadurch gekennzeichnet, daß** die kallotenförmigen Ausnenehmung (16) in Längsrichtung der abgehenden Kanäle (2a,2b) aufgebohrt ist.

6. Vorrichtung nach einem der Ansprüche 3 bis 5, **dadurch gekennzeichnet, daß** zur Längslagensicherung des Trennwandstopfens (10) ein Schraubstopfen (14) an der Rückseite des Trennwandstopfens in die Bohrung (12) einschraubbar ist.

7. Vorrichtung zur gezielten Aufteilung einer einen Kanal (21) durchströmenden nicht-newtonschen Flüssigkeit, zum Beispiel einer Kunststoffschmelze, die strömungsbedingt eine im Querschnitt nach außen abnehmende Viskosität aufweist, beim Durchfluß durch eine den Flüssigkeitsstrom umlenkende und aufteilende vorzugsweise oder im wesentlichen T-förmige Kanalverzweigung (T), **dadurch gekennzeichnet, daß** zur Erzielung einer Aufteilung der Flüssigkeit auf die abgehenden Kanäle der Kanalverzweigung derart, daß die in die abgehenden Kanäle (22a,22b) einfließende Flüssigkeit möglichst keine ungleich große und/oder unsymmetrische Verteilung der unterschiedlich viskosen Anteile der Flüssigkeit erleidet, in die Kanalverzweigung (T) ein Umlenkkörper (23) eingebaut ist, der so beschaffen ist, daß im wesentlichen der zentrale (dickflüssige) Anteil der Flüssigkeit aus dem zuströmemden Kanalabschnitt (21) vor seiner Umlenkung in die abgehenden Kanäle (22a,22b) in zwei Komponenten aufgeteilt wird und diese beiden Komponenten derart umgelenkt werden, daß sie im Bereich vor den abgehenden Kanälen (22a,22b) vorzugsweise diametral aufeinander zu fließen (Figur 9).

8. Vorrichtung nach Anspruch 7, **dadurch gekennzeichnet, daß** die Strömungsrichtungen der beiden aufeinander zufließenden Komponenten im wesentlichen senkrecht zu der Längsachse der abgehenden Kanäle (22a,22b) verlaufen.

9. Vorrichtung nach Anspruch 7 oder 8, **dadurch gekennzeichnet, daß** der Umlenkkörper (23) mit einer den Flüssigkeitsstrom teilenden Schneide (24) in das Ende des zuführenden Kanals (21) ragt und sich von der Schneide (24) an senkrecht zu dieser zunächst verbreitert und dann wieder verschmälert.

10. Vorrichtung nach Anspruch 9, **dadurch gekennzeichnet, daß** der Umlenkkörper (23) mit seiner Peripherie nirgends die Kanalwand des zuführenden Kanalabschnitts (21) berührt.

11. Vorrichtung nach Anspruch 9 oder 10, **dadurch gekennzeichnet, daß** der Umlenkkörper (23) durch einem an seinem in Strömungsrichtung hinteren Ende vorhandenen Steg (27) am Boden der Kanalverzweigung (T) befestigt ist.

12. Vorrichtung nach einem der Ansprüche 8 bis 11, **dadurch gekennzeichnet, daß** die Form des Umlenkkörpers (23) aus einem Zylinderkörper hervorgeht, der an seinem vorderen Ende mit der genannten Schneide (24) versehen ist, dahinter eine von zwei Seiten (25), die im wesentlichen parallel zur Schneide verlaufen, ausgehende Einschnürung besitzt, die den genannten Steg (27) bildet, und sich dann als zylindrischer Abschnitt (31) fortsetzt, mit dessen Hilfe der Umlenkkörper (23) von außen durch eine Bohrung im Boden der Kanalverzweigung (T) in diese einsetzbar und befestigbar ist.

## Claims

1. Device for specifically dividing a non-Netonian fluid, flowing through a channel (1), for example molten plastic, which exhibits a flow-caused cross sectional outwardly decreasing viscosity, when flowing through a preferably or essentially T-shaped channel branching (T) which diverts and divides the stream of fluid, **characterized in that** in order to achieve a distribution of the fluid to the outgoing channels (2a,2b) of the channel branching in such a manner that the fluid flowing into the outgoing channels incurs as little as possible an uneven distribution of the different viscous portions of the fluid, there is installed at the end or shortly before or shortly behind the end of the supply channel (1) a separating wall (11) in the channel branching (T), which separating wall is not adapted to close one of the outgoing channels (2a,2b), and which separating wall divides the fluid stream onstreaming from the supply channel section (1) into two halves, whereby the rotation angle position of the separating wall (11) around the longitudinal axis of the supply channel assumes a position adapted to the distribution of the different viscous portions of the fluid in the supply channel section (1) (Figure 7).

2. Device according to claim 1, **characterized in that** the angle position of the separating wall (11) is adjustable.

3. Device according to claim 1 or 2, **characteriz**e d in that the separating wall (11) by means of a separating wall plug (10), to which the separating wall (11) is fixed, is insertable or inserted, respectively, in a bore (12) in the bottom (6) of the channel branching (T).

4. Device according to claim 3, **characterized in that** the separating wall plug (10) is provided, at its end facing towards the supply channel section (1), with a spherically-shaped recess (16), into which the separating wall (11) is mounted.

5. Device according to claim 4, **characterized in that** said spherically-shaped recess (16) is bored open in the longitudinal direction of the outgoing channels (2a,2b).

6. Device according to any of claims 3 to 5, **charac-terized** in that for securing the longitudinal position of the separating wall plug (10) a threaded plug (14) at the back side of the separating wall plug is adapted to be screwed into the bore (12).

7. Device for specifically dividing a non-Netonian fluid, flowing through a channel (21), for example molten plastic, which exhibits a flow-caused cross sectional outwardly decreasing viscosity, when flowing through a preferably or essentially T-shaped channel branching (T) which diverts and divides the stream of fluid, **characterized in that** in order to achieve a distribution of the fluid to the outgoing channels of the channel branching in such a manner that the fluid flowing into the outgoing channels (22a,22b) incurs as little as possible an uneven und/oder unsymmetrical distribution of the different viscous portions of the fluid, there is installed a deflection body (23) in the channel branching (T) adapted such as to essentially divide the central (viscous) portion of the fluid in the supply channel section (21) into two components prior to its deflection into the outgoing channels (22a,22b) and that these two components are deflected in such a manner, that they in the area of the outgoing channels (22a,22b) flow preferably diametrically towards each other (Figure 9).

8. Device according to claim 7, **characterized in that** the flow direction of the components which flow towards each other runs essentially perpendicular to the longitudinal axis of the outgoing channels (22a,22b).

9. Device according to claim 7 or 8, **characteriz**e d in that said deflection body (23) projects with a cutting edge (24) into the end of the supply channel, which cutting edge divides the fluid stream, and that the deflection body (23) beginning at the cutting edge (24) and perpedicular to the cutting edge at first gets wider and then again narrower.

10. Device according to claim 9, **characterized in that** the periphery of the deflection body (23) nowhere gets in touch with the channel wall of the supply channel (21).

11. Device according to claim 9 or 10, **characterized in that** said deflection body (23) is fixed at its rear end in flow direction by means of a fastening rod (27) at the bottom of the channel branching (T).

12. Device according to any of claims 8 to 11, **characterized in that** the shape of the deflection body (23) emerges from a cylindrical body, which is provided at its front end with said cutting edge (24) followed by a constriction originating from two sides (25) which extend essentially in parallel to the cutting edge, which constriction forms said fastening rod (27), and then continues as a cylindrical section (31) with the help of which said deflection body (23) is insertable and fixable from the outside through a bore in the bottom of the channel branching (T).

## Revendications

1. Dispositif de répartition ciblée d'un liquide non-newtonien passant dans un conduit (1), par exemple d'une matière plastique fondue, qui, en raison de l'écoulement, a une viscosité décroissant vers l'extérieur en section transversale, lors du passage dans une bifurcation (T) de conduit de déviation et de répartition, de préférence ou sensiblement en forme de T, **caractérisé en ce que**, pour obtenir une répartition du liquide entre les conduits (2a, 2b) partant de la bifurcation (T) de conduit, de manière à ce que liquide entrant dans les conduits partant ne subisse pas autant que possible d'inégalité de répartition de parties du liquide de viscosité de manière différente, il est monté, dans la bifurcation (T) du conduit à l'extrémité ou peu avant ou peu après l'extrémité du conduit (1) arrivant, une cloison (11) propre à fermer l'un des conduits (2a, 2b) partant, cloison qui subdivise en deux moitiés le courant de liquide sortant du tronçon (1) de conduit arrivant, la position angulaire en rotation de la cloison (11) autour de l'axe longitudinal du conduit arrivant prenant une position qui est adaptée à la répartition des parties de viscosité de manière différente du liquide dans le tronçon (1) de conduit arrivant (figure 7).

2. Dispositif suivant la revendication 1, **caractérisé en ce que** la position angulaire de la cloison (11) est réglable.

3. Dispositif suivant la revendication 1 ou 2, **caractérisé en ce que** la cloison (11) peut, à l'aide d'un tampon (10) de cloison, auquel la cloison (11) est fixée, être, par un trou (12) dans le fond (6) de la bifurcation (T) du conduit, insérée dans celui-ci ou y est insérée.

4. Dispositif suivant la revendication 3, **caractérisé en ce que** le tampon (10) de la cloison est pourvu, à son extrémité tournée vers le tronçon (1) de conduit arrivant, d'un évidement (16) en forme de calotte, dans lequel la cloison (11) est fixée.

5. Dispositif suivant la revendication 4, **caractérisé en ce que** l'évidement (16) en forme de calotte est alésé dans la direction longitudinale des conduits (2a, 2b) partant.

6. Dispositif suivant l'une des revendications 3 à 5, **caractérisé en ce que**, pour assurer la position longitudinale du tampon (10) de la cloison, un bouchon (14) fileté peut être inséré dans le trou (12) du côté arrière du tampon de la cloison.

7. Dispositif de répartition ciblée d'un liquide non-newtonien passant dans un conduit (1), par exemple d'une matière plastique fondue, qui, en raison de l'écoulement, a une viscosité décroissant vers l'extérieur en section transversale, lors du passage dans une bifurcation (T) de conduit de déviation et de répartition, de préférence ou sensiblement en forme de T, **caractérisé en ce que**, pour obtenir une répartition du liquide sur les conduits partant de la bifurcation du conduit, de manière à ce que le liquide entrant dans les conduits (22a, 22b) partant ne subisse pas autant que possible d'inégalité et/ou de dissymétrie de répartition des parties de viscosité différente du liquide, il est monté, dans la bifurcation (T) du conduit, une chicane (23), qui est telle que, pour l'essentiel, la partie centrale (épaisse) du liquide sortant du tronçon (21) de conduit arrivant soit, avant sa déviation dans les conduits (22a, 22b) partant, subdivisée en deux composantes et ces deux composantes sont déviées de manière à s'écouler l'une sur l'autre, de préférence diamétralement, dans la zone des conduits (22a, 22b) partant (figure 9).

8. Dispositif suivant la revendication 7, **caractérisé en ce que** les sens d'écoulement des deux composantes arrivant l'une sur l'autre sont sensiblement perpendiculaires à l'axe longitudinal des conduits (22a, 22b) partant.

9. Dispositif suivant la revendication 7 ou 8, **caractérisé en ce que** la chicane (23) pénètre par une lame (24) séparant le courant de liquide dans l'extrémité du conduit (21) arrivant et, à partir de la lame (24), à la perpendiculaire de celle-ci, s'élargit d'abord et ensuite redevient plus étroite.

10. Dispositif suivant la revendication 9, **caractérisé en ce que** la périphérie de la chicane (23) ne touche nulle part la paroi du tronçon (21) de conduit arrivant.

11. Dispositif suivant la revendication 9 ou 10, **caractérisé en ce que** la chicane (23) est fixé au fond de la bifurcation (T) du conduit par une traverse (27) présente à l'extrémité arrière dans le sens du courant.

12. Dispositif suivant l'une des revendications 8 à 11, **caractérisé en ce que** la forme de la chicane (23) provient d'une pièce cylindrique, qui est pourvue à son extrémité avant de la lame (24) mentionnée, derrière d'un resserrement à partir de deux côtés (25), qui s'étendent sensiblement parallèlement à la lame, et formant la traverse (27) mentionnée, et qui se poursuit ensuite sous la forme d'un tronçon (31) cylindrique, à l'aide duquel la chicane (23) peut de l'extérieur, par un trou dans le fond de la bifurcation (T) du conduit, être insérée dans celui-ci et y être fixée.
